# EUROPEAN PATENT APPLICATION

(11) **EP 2 555 198 A1**
(43) Date of publication of application: **06.02.2013**
(21) Application number: 11762144.1
(22) Date of filing: 01.03.2011
(51) Int. Cl.: G11B 27/10, G11B 20/10

(54) **OPTICAL DISC PLAYBACK DEVICE**

(30) Priority: 29.03.2010 JP 2010075262
(71) Applicant: Panasonic Corporation, Kadoma-shi Osaka 571-8501 (JP)
(72) Inventor: YUKI, Keizo, Osaka 540-6207 (JP)
(74) Representative: Grünecker, Kinkeldey, Stockmair & Schwanhäusser
(86) International application number: PCT/JP2011/001188
(87) International publication number: WO 2011/121890

(57) **Abstract**

A reproducing apparatus 100 includes a signal processing unit 115 that controls output of image and sound of a title based on data recorded on a BD-ROM 10 inserted into the reproducing apparatus 100. The signal processing unit 115 holds first screen information concerning a mask screen that masks a title reproduction screen, and second screen information concerning a replacement demand screen that prompts replacement of the housed BD-ROM 10, outputs the mask screen based on the first screen information instead of the image of the title while the vehicle is running the title is being reproduced, and outputs the replacement demand screen based on the second screen information when the sound of the title is in a silent state continuously for a predetermined time or more while the vehicle is running and the title is being reproduced. With such a configuration, it is possible to notify a user of a situation where an optical disk needs to be replaced in order to watch and listen to a next part of a title in a case where the title is constituted by a plurality of optical disks, and the title is being reproduced by an on-vehicle optical disk reproducing apparatus while a vehicle is running.

## Description

### Technical Field

The present invention relates to an optical disk reproducing apparatus that reproduces data recorded on a recording medium such as a BD-ROM.

### Background Art

In recent years, optical disk reproducing apparatuses have been widespread, which replay a large-capacity optical disk on which high image and sound quality information having a high interactive function is recorded.

A typical large-capacity optical disk as described above is a Blu-ray disk (registered trademark) (hereinafter abbreviated as "BD"). The BD has an enormous data capacity (25 gigabytes (GB) for a single layer dish and 50 GB for a two layer disk), and can store movie contents with high-definition image quality. A commercially available or rental software product (packaged software) using a BD is supplied in the form of a BD-ROM (Blu-ray Disc Read-Only-Memory) that is a read-only medium that does not allow writing or rewriting of data written in a production process.

For a BD-ROM, two specifications are developed: an HDMV (High Definition Movie) mode and a BD-J (Blu-ray Disc Java) mode.

The HDMV mode has expanded image and sound codec specifications as compared to a conventional DVD-ROM (Digital Versatile disk Read-Only-Memory), and allows use of high-definition image and high-quality sound. Content specifications are the same as those of the DVD-ROM. In the description below, a title (content) of the HDMV mode is referred to as an "HDMV title".

The BD-J mode allows addition of visual expression such as superimposed images to the HDMV mode by a Java (registered trademark) application. In the description below, a title (content) of the BD-J mode is referred to as a "BD-J title".

A BD-ROM title that contains a digital stream of image and sound and also records a Java (registered trademark) application is sometimes constituted by a plurality of disks. In this case, it is practicable to provide a function that, when a playback position of the first BD-ROM disk reaches an end, displays an image that prompts the user to replace the disk with a next BD-ROM disk (hereinafter referred to as a "disk replacement demand screen"). A control function for display of the disk replacement demand screen and cash package management is referred to as "disk unbound".

### Citation List

### Patent Literature

[Patent Literature 1] National Publication of International Patent Application No. 2008-507795

### Summary of Invention

### Technical Problem

Generally, an on-vehicle optical disk reproducing apparatus has various other functions than reproduction of an optical disk: for example, navigation, radio broadcasting, and terrestrial digital broadcasting. A user can switch operation modes of the optical disk reproducing apparatus to cause the optical disk reproducing apparatus to perform a desired function.

In an on-vehicle optical disk reproducing apparatus, generally, a title reproduction screen is masked by a different image (hereinafter referred to as a "mask screen") displayed so that the driver does not watch the title reproduction screen while the vehicle is running. Thus, the driver can safely enjoy only sound of a title under reproduction.

However, during display of the mask screen, a disk replacement demand screen based on data recorded on a BD-ROM disk is also masked. Thus, the driver and a passenger (hereinafter referred to collectively as a "user") cannot visually recognize the disk replacement demand screen, and cannot recognize on a display screen that the BD-ROM disk needs to be replaced. Also, since a silent state continues, the user may incorrectly recognize that the apparatus has failed.

It is an object of the present to provide an optical disk reproducing apparatus that can notify a user of a situation where an optical disk needs to be replaced in order to watch and listen to a next part of a title in a case where the title is constituted by a plurality of optical disks, and the title is being reproduced by an on-vehicle optical disk reproducing apparatus while a vehicle is running.

### Solution to Problem

The present invention provides an on-vehicle optical disk reproducing apparatus, including: a housing unit that houses an optical disk; and a signal processing unit that controls output of image and sound of a title reproduced based on data recorded on the housed optical disk, wherein the signal processing unit holds first screen information concerning a mask screen that masks a reproduction screen of the title, and second screen information concerning a replacement demand screen that prompts replacement of the optical disk housed in the housing unit, the signal processing unit causes the mask screen to be output based on the first screen information instead of the image of the title while the vehicle is running and the title is being reproduced, and the signal processing unit switches a screen to be output from the mask screen based on the first screen information to the replacement demand screen based on the second screen information when the sound of the title is in a silent state continuously for a predetermined time or more while the vehicle is running and the title is being reproduced.

### Advantageous Effects of Invention

According to the present invention, it is possible to notify a user of a situation where an optical disk needs to be replaced in order to watch and listen to a next part of a title in a case where the title is constituted by a plurality of optical disks, and the title is being reproduced by an on-vehicle optical disk reproducing apparatus while a vehicle is running.

### Brief Description of Drawings

[Figure 1] Figure 1 illustrates a usage pattern of an optical disk reproducing apparatus according to an embodiment of the present invention as a system.
[Figure 2] Figure 2 is a block diagram showing a configuration of the optical disk reproducing apparatus according to the embodiment of the present invention.
[Figure 3] Figure 3 illustrates a file configuration of a BD-ROM.
[Figure 4] Figure 4 illustrates a relationship between Index.bdmv shown in Figure 3 and a title.
[Figure 5A] Figure 5A shows an example of a title reproduction screen.
[Figure 5B] Figure 5B shows an example of a mask screen.
[Figure 5C] Figure 5C shows an example of a disk replacement demand screen according to the embodiment of the present invention.
[Figure 5D] Figure 5D shows an example of a display screen while optical disk reproduction is stopped.
[Figure 6] Figure 6 is a flowchart for illustrating an operation of screen display control in the optical disk reproducing apparatus according to the embodiment of the present invention.

### Description of Embodiments

Now, an embodiment of the present invention will be described with reference to the drawings.

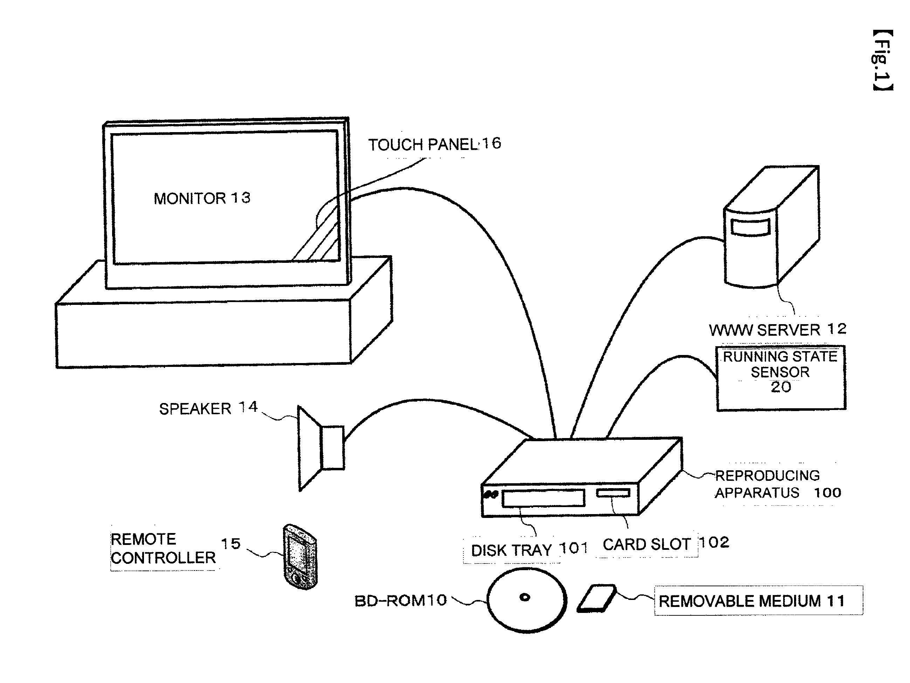

Figure 1 illustrates a usage pattern of an optical disk reproducing apparatus (hereinafter simply referred to as a "reproducing apparatus") according to an embodiment of the present invention as a system. The reproducing apparatus 100 of this embodiment shown in Figure 1 is an on-vehicle reproducing apparatus, which is mounted in a vehicle for use.

The reproducing apparatus 100 includes a disk tray 101 as a housing unit, and the disk tray 101 can house an optical disk such as a BD-ROM 10. Specifically, the disk tray 101 houses the optical disk inserted into the reproducing apparatus 100, and is configured to insert and eject the optical disk into and from the reproducing apparatus 100.

In this embodiment, data of AV (Audio-Visual) contents such as a movie or a music live video image is recorded on the BD-ROM 10. In this embodiment, description will be made as an example to a case where the reproducing apparatus 100 reproduces image and sound from data recorded on the BD-ROM 10.

The reproducing apparatus 100 includes a card slot 102, which can house a removable medium 11.

The reproducing apparatus 100 is connected to a monitor 13 and a speaker 14 so as to communicate with each other. The connection may be wired or wireless. In a usage pattern shown in Figure 1, although one monitor 13 and one speaker 14 are provided, a plurality of monitors 13 and a plurality of speakers 14 may be provided. In the description below, one monitor 13 is provided for convenience of description.

The monitor 13 displays images. Images reproduced by the reproducing apparatus 100 are output by the monitor 13. The monitor 13 also has a function of displaying an operation menu based on operation menu data from the reproducing apparatus 100. Thus, a user can operate the reproducing apparatus 100 using an operation button (not shown) provided on the reproducing apparatus 100 or a remote controller 15 while looking at the operation menu displayed on the monitor 13. Since the monitor 13 includes a touch panel 16, the user can push an operation button in a displayed operation menu to operate the reproducing apparatus 100.

The speaker 14 outputs sound. Sound reproduced by the reproducing apparatus 100 is output by the speaker 14.

The reproducing apparatus 100 is connected to a WWW (World Wide Web) server 12 via the Internet so as to communicate with each other. In this embodiment, the reproducing apparatus 100 is an on-vehicle reproducing apparatus, and connection with the WWW server 12 is generally wireless.

The reproducing apparatus 100 is also connected to a running state sensor 20 provided in the vehicle. The running state sensor 20 is, for example, a sensor that can detect a vehicle speed, or a state of an emergency brake or a shift lever, and obtains information used for determining whether the vehicle is running or stopped.

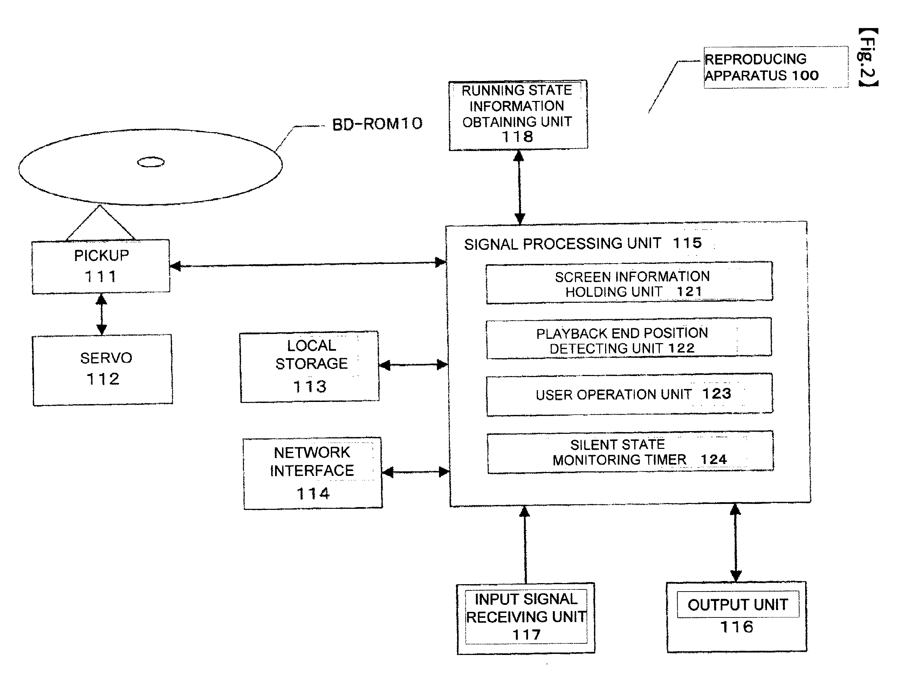

Figure 2 is a block diagram showing a configuration of the reproducing apparatus 100. In Figure 2, the reproducing apparatus 100 includes a pickup 111, a servo 112, a local storage 113, a network interface 114, a signal processing unit 115, an output unit 116, an input signal receiving unit 117, and a running state information obtaining unit 118. The signal processing unit 115 includes a screen information holding unit 121, a playback end position detecting unit 122, a user operation unit 123, and a silent state monitoring timer 124.

The servo 112 controls the pickup 111. Specifically, the servo 112 moves the pickup 111 radially of the BD-ROM 10 (seek) or axially of the BD-ROM 10 (focus) to adjust a position of the pickup 111.

The pickup 111 obtains data from the BD-ROM 10 under control by the servo 112, and sends obtained data to the signal processing unit 115.

The output unit 116 includes devices such as the monitor 13 and the speaker 14 shown in Figure 1.

The running state information obtaining unit 118 is an interface with the running state sensor 20 shown in Figure 1, and obtains running state information representing a detection result of a running state from the running state sensor 20. The running state information obtained from the running state sensor 20 is sent to the signal processing unit 115.

The signal processing unit 115 is implemented by an arithmetic processing unit, for example, a CPU (Central Processing Unit) executing a predetermined software program. The signal processing unit 115 processes data obtained from the BD-ROM 10 by the pickup 111 (hereinafter referred to as "BD data"). Although processing of the BD data mainly includes decoding, the signal processing unit 115 may perform image processing for superimposing a different image on an image based on the BD data.

The signal processing unit 115 also processes data stored in the local storage 113, and data downloaded from outside (for example, the WWW server 12 shown in Figure 1) via the network interface 114.

The data stored in the local storage 113 and the data downloaded via the network interface 114 are mainly applications of the BD data (for example, a Java (registered trademark) application that is a control program of a BD-J title). The local storage 113 is, for example, the removable medium 11 shown in Figure 1.

Specifically, the signal processing unit 115 is configured to reproduce an AV content based on the BD data appropriately using a content control program in the above-described processing.

When an operation mode of the reproducing apparatus 100 is an optical disk reproduction mode (hereinafter simply referred to as a "reproduction mode"), the signal processing unit 115 sends image data and sound data obtained by signal processing of the BD data to the output unit 116. This allows output of the AV content stored in the BD-ROM 10.

When the operation mode of the reproducing apparatus 100 is a different mode (that is, a mode other than the reproduction mode), the signal processing unit 115 sends image data and sound data contained in an input signal received via the input signal receiving unit 117 to the output unit 116. This allows output of an AV content from a different source (car navigation image, terrestrial digital broadcasting, radio broadcasting, or the like).

The signal processing unit 115 receives the content of a user operation using the remote controller 15 in Figure 1 or the like, and determines whether the operation can be accepted. If the operation can be accepted, the signal processing unit 115 causes the user operation unit 123 to perform the operation.

The signal processing unit 115 also has a function of displaying user interfaces originally incorporated into the reproducing apparatus 100 on the monitor 13 in Figure 1 or the like. The user interfaces include a playback button and a stop button or the like held as programs in an embedded memory (not shown) of the reproducing apparatus 100, and displayed on the monitor 13 as functions of the reproducing apparatus 100.

Thus, when the user uses the remote controller 15 or the touch panel 16 to perform an operation, the signal processing unit 115 associates a user input operation with a function of each button, and causes the user operation unit 123 to perform an operation of the operated button.

The screen information holding unit 121 is included in the signal professing unit 115, and holds screen information that forms the base of an image (screen) to be output from the output unit 116 (monitor 13 in Figure 1) as required. The screen information is not read from the BD-ROM 10 during reproduction of the BD-J title, but is previously recorded as data in the embedded memory (not shown) of the reproducing apparatus 100.

The playback end position detecting unit 122 is included in the signal processing unit 115, and detects whether a playback end position is reached from disk unbound information in a BD-ROM disk on which a BD-J application (described later in detail) is recorded.

The silent state monitoring timer 124 is included in the signal processing unit 115, and monitors and measures time when sound data decoded during reproduction of the BD-J title is in a silent state.

The configuration of the reproducing apparatus 100 of this embodiment has been described above.

The configuration of the reproducing apparatus 100 may be changed as appropriate. For example, in this embodiment, when the reproducing apparatus 100 is in a different mode, an input signal from a different source is provided via the reproducing apparatus 100 to the output unit 116. However, when the reproducing apparatus 100 is in a different mode, an input signal from a different source may be provided to the output unit 116 without via the reproducing apparatus 100.

A file configuration of the BD-ROM 10 will be described.

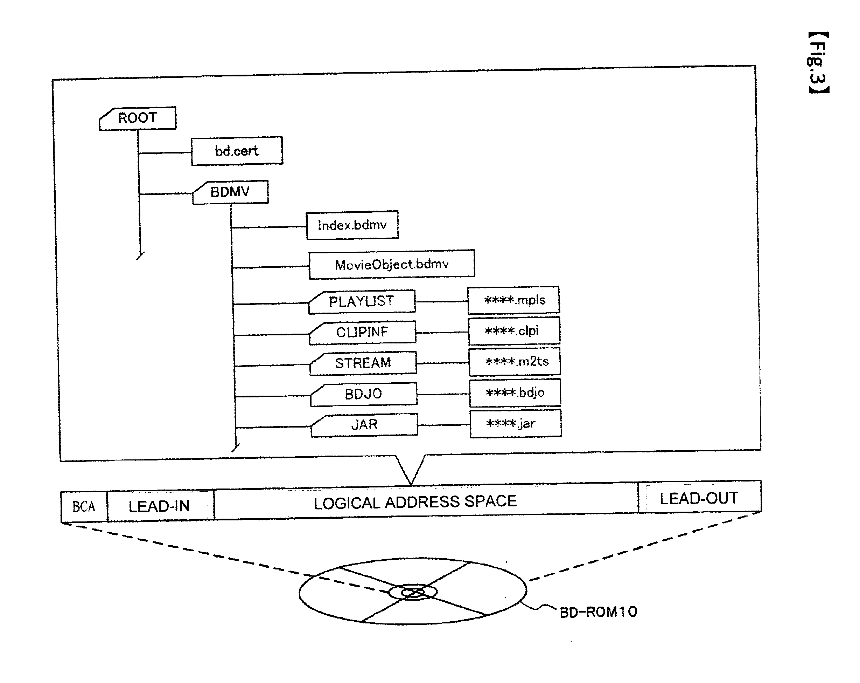

Figure 3 shows a file configuration of the BD-ROM 10. The BD-ROM 10 includes, like other types of optical disks (DVD, CD, or the like), a spiral recording area from an inner periphery toward an outer periphery thereof, and has a logical address space in which logical data can be recorded between lead-in of an inner peripheral portion and a lead-out of an outer peripheral portion. Inside the lead-in, a special area is provided that is referred to as BCA (Burst Cutting Area) and read only by a drive. This area cannot be read from an application, and is thus generally used for, for example, a copyright protection technique.

Application data such as image data is recorded in the logical address space with file system information (volume) at the beginning. A file system includes a universal disk format (UDF), ISO (International Organization for Standardization) 9660, or the like. Thus, logical data recorded in the logical address space can be read using a directory/file structure as in a normal PC (Personal Computer). A location of a file in the file system is identified by file path information (file path) that is a combination of a directory name and a file name (generally, 255 characters maximum).

In this embodiment, in the directory/file structure on the disk of the BD-ROM 10, a BDMV directory and a bd.cert file are located immediately under a root directory (ROOT). The BDMV directory is a directory in which data such as an AV content and management information dealt with by the BD-ROM 10 is recorded. The bd.cert (fixed file name) is a certificate used for versification of a signature when a content added for a virtual package is merged with data on the BD-ROM 10.

In the BDMV directory, two types of files such as index.bdmv and MovieObject.bdmv are located.

The MovieObject.bdmv is a file that stores Movie Object.

The index.bdmv (fixed file name) is a file that stores management information concerning the entire BD-ROM 10. The index.bdmv has various kinds of information such as organizationID (32 bit) and discID (128 bit). The organizationID is an identifier for identifying a provider of a movie or the like. The discID is an identifier assigned to each BD-ROM 10 provided from a provider of a movie or the like.

After the BD-ROM 10 is inserted into the reproducing apparatus 100, the index.bdmv is first read, and thus the reproducing apparatus 100 can uniquely recognize the BD-ROM 10.

In addition, the index.bdmv includes an Index Table that represents a plurality of titles that are recorded on the BD-ROM 10 and can be reproduced, associated with a BD-J object that specifies each title. A relationship between the index.bdmv and the title will be described later.

Under the BDMV directory, five sub-directories referred to as a PLAYLIST directory, a CLIPINF directory, a STREAM directory, a BDJO directory, and a JAR directory are located.

In the STREAM directory, there is a file with an extension m2ts (****.m2ts). This file stores an AV stream obtained by multiplexing a video stream, an audio stream, and a graphic stream.

In the CLIPINF directory, there is a file with an extension clpi (****.cl.pi). This file stores management information corresponding one-on-one to the AV stream.

In the PLAYLIST directory, there is a file with an extension mpls (****.mpls). This file stores play list information that defines a logical reproduction path in the AV stream. The play list information includes one or more play item information. The play item information represents reproduction sections of the AV stream, which are described in the order in which the sections are to be reproduced in the play list information.

The play list information has a field in which information for limiting a user operation (user operation limiting information) is described. When user operation limiting information for designating prohibition of the user operation such as fast-forward, stop, or pause is described in certain play list information, the signal processing unit 115 generally operates so as not to accept the prohibited user operation during reproduction of a reproduction section corresponding to the play list information.

Sections in which a pause operation is prohibited by a content include fast playback for reproduction after insertion of the optical disk, a top menu, and a menu title that is not a top menu but displays button screens that can be selected by a user.

The fast playback includes an introduction of a different package software, a movie trailer, or a demonstration content of a sound field reproduction technique.

The play item information also has a field in which user operation limiting information is described. When the user operation limiting information for designating prohibition of the user operation such as fast-forward, stop, or pause is described in certain play list information, the signal processing unit 115 generally operates so as not to accept the prohibited user operation during reproduction of a reproduction section corresponding to the play item information.

Limitation of the user operation for the reproduction section corresponding to certain play item information is determined by sum operation of user operation limiting information associated with the play item information, and user operation limiting information associated with play list information containing the play item information.

Similar user operation limiting information is sometimes described in data (for example, data of a menu title including a button screen) recorded in a reference specified in the play list information.

In the JAR directory, there is a file with an extension jar (****.jar). This file is a Java (registered trademark) archive file.

In the BDJO directory, there is a file with an extension bdjo (****.bdjo). This file stores BD-J Object.

The BD-J Object is information for defining a title by associating an AV stream represented by the play list information with an application. The BD-J Object represents "Application Control Table", and a list of play list information that can be reproduced in a title to be defined.

The application management table (AMT) is a table that implements "Application Signaling". The "Application Signaling" is managing a title in the BD-ROM 10 as an existence section of an application, and controlling start and finish of the application. The existence section refers to a section in which an application can exist on a heap memory of a virtual machine in a time frame of the entire content recorded on the BD-ROM 10. The "existence" refers to a state where the application is read by the heap memory, and can be executed by the virtual machine.

In the application management table, an identifier of an application (application ID), and an ID of a Java (registered trademark) archive file belonging to the application are listed. This represents an application having a title to be defined as an existence section. Specifically, one application is constituted by one or more Java (registered trademark) archive files. As such, a Java (registered trademark) application in which a sector is managed by an application management table in the BD-J object is referred to as a "BD-J application".

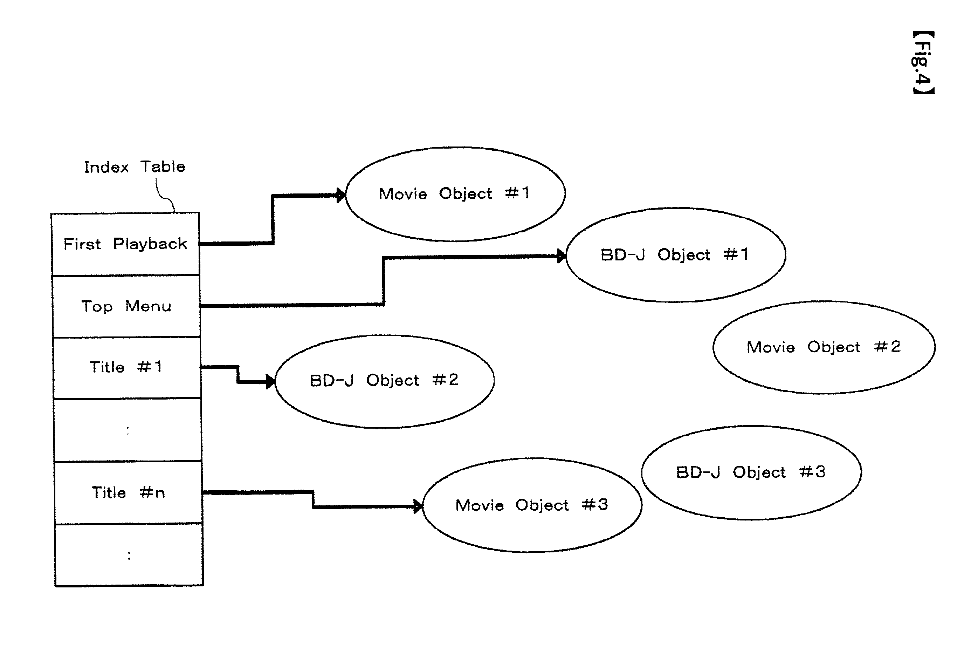

Figure 4 shows a relationship between the index.bdmv file and the title.

The title is a reproduction unit including an application and an AV stream in combination. In the index.bdmv file, a title configuration on the BD-ROM 10 is described. In an Index Table contained in the index.bdmv, a reference relationship between each title on the BD-ROM 10 and a corresponding application is managed. The corresponding application is the Java (registered trademark) application for the BD-J title, and a scenario program for a HDMV title.

Special titles include "First Playback" and "Top Menu". The First Playback is a title first automatically reproduced at the start of the BD-ROM 10. The First Playback is mainly used for displaying terms of service of the BD. The Top Menu is reproduced when a menu key of the remote controller is pushed or reproduction of a title is finished, and mainly used for selecting a title and selecting a language of caption/voice.

In Figure 4, the First Playback is defined by Movie object #1 among Movie objects #1, #2 and #3 and BD-J objects #1, #2 and #3. Reproduction of the First Playback requires reference to the Movie object #1. The Top Menu is defined by the BD-J object #1, and reproduction of the Top Menu requires reference to the BD-J object #1. Title #1 is defined by the BD-J object #2, and reproduction of the Title #1 requires reference to the BD-J object #2. Title #n is defined by the Movie object #3, and reproduction of the title #n requires reference to the Movie object #3.

Next, screens output by the monitor 13 when the operation mode of the reproducing apparatus 100 is the reproduction mode will be described with some examples.

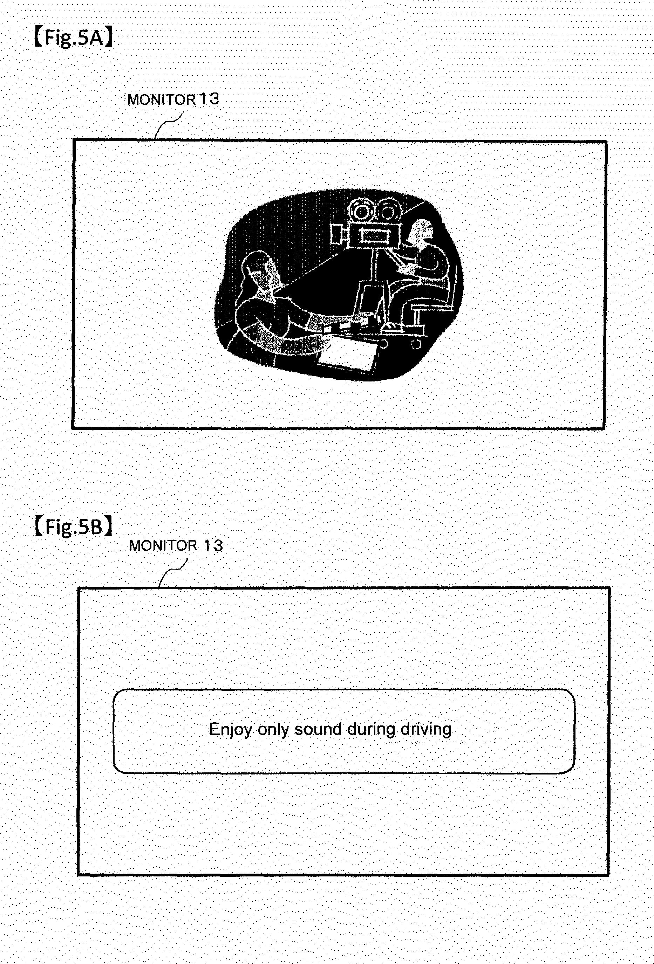

Figure 5A shows an example of a title reproduction screen based on data recorded on the BD-ROM 10. Specifically, an image is displayed on the monitor 13 based on image data decoded from data recorded on the BD-ROM 10.

Figure 5B shows an example of a mask screen. The mask screen is a screen displayed for safety during driving as described above. In the mask screen, the entire background area is generally filled in with opaque color, and thus when the mask screen is output from the monitor 13, a different image is not output. The content of the mask screen is based on screen information (mask screen information) held by the screen information holding unit 121 of the signal processing unit 115.

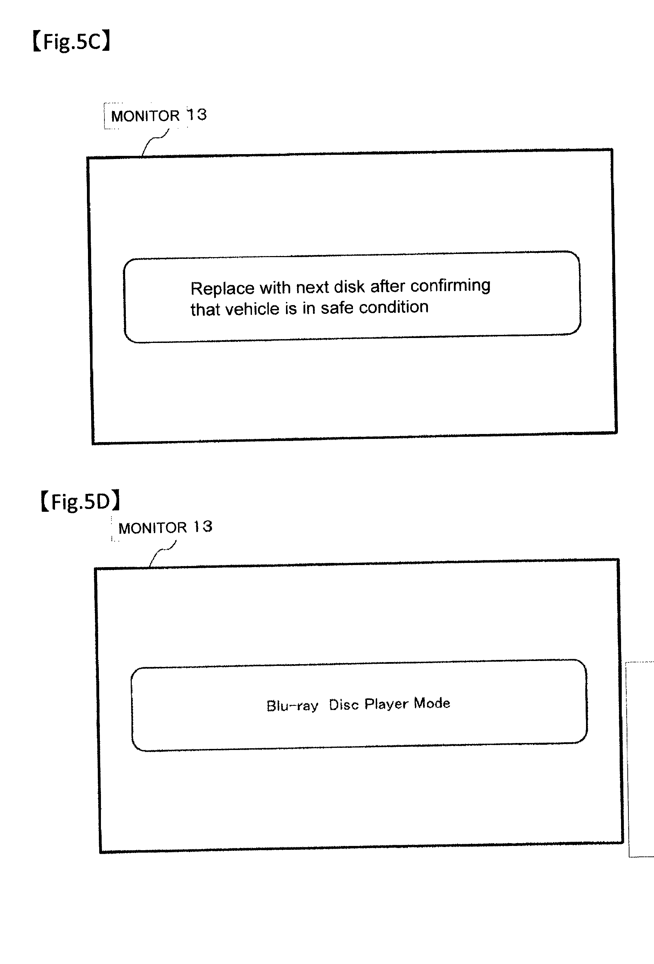

Figure 5C shows an example of the disk replacement demand screen. As described above, the disk replacement demand screen contains a text message that prompts replacement of the disk with a next optical disk in order to watch and listen to a next part of a title when the title is constituted by a plurality of optical disks. The content of the disk replacement demand screen is based on screen information (disk replacement demand screen information) held by the screen information holding unit 121 of the signal processing unit 115.

Generally, when the BD-J title is constituted by a plurality of BD-ROMs 10, all the BD-ROMs 10 except the last one are provided with the function of disk unbound. However, the disk replacement demand screen based on the data recorded on the BD-ROM 10 cannot be output during output of the mask screen. In view of this, in this embodiment, disk replacement demand screen information that forms the base of the disk replacement demand screen that can be output during output of the mask screen is held in the reproducing apparatus 100 like the mask screen information.

Figure 5D shows an example of a screen (playback stop state notification screen) output when the operation mode of the reproducing apparatus 100 is the reproduction mode but reproduction is stopped, or when the operation mode of the reproducing apparatus 100 is the reproduction mode but the optical disk is not inserted. The content of the playback stop state notification screen is based on screen information (playback stop state notification screen information) held by the screen information holding unit 121 of the signal processing unit 115.

When the operation mode of the reproducing apparatus 100 is the reproduction mode, screen display control to selectively output any of the above screens is performed in the reproducing apparatus 100.

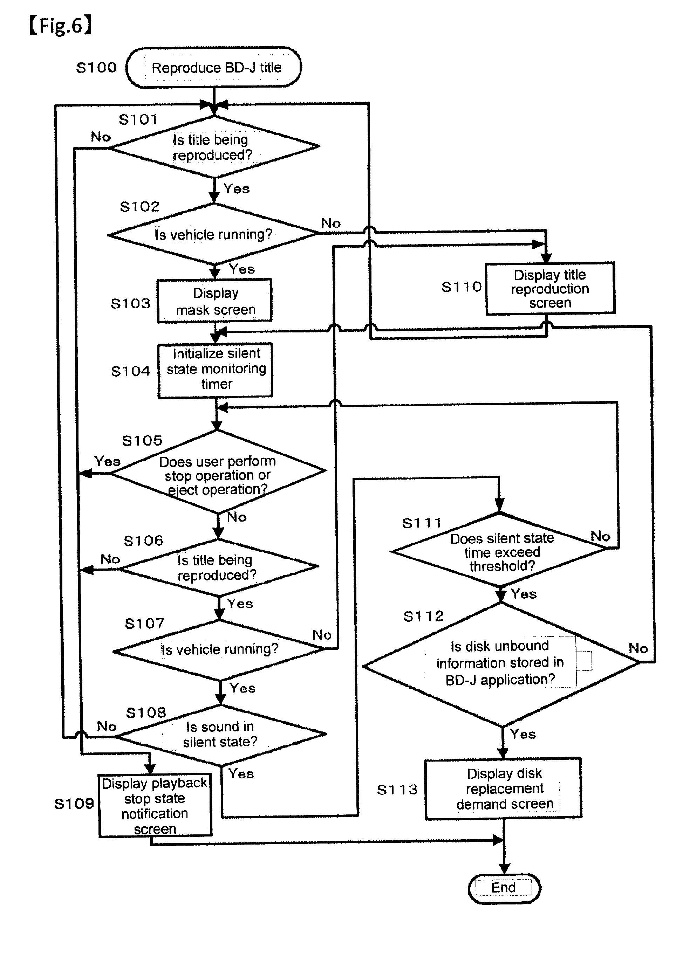

Figure 6 is a flowchart for illustrating an operation of the screen display control of the reproducing apparatus 100.

First, in Step S100, the BD-ROM 10 on which the BD-J application is recorded is inserted into the reproducing apparatus 100, and reproduction of the BD-J title is started. The reproduction of the BD-J title may be automatically started after insertion of the BD-ROM 10, or the reproduction of the BD-J title may be started by a reproduction operation by a user.

After the reproduction is started, in Step S101, the signal processing unit 115 determines whether the title is being reproduced. When the title is being reproduced (S101: Yes), the processing of the screen display control proceeds to Step S102. When the title is not being reproduced (S101: No), the signal processing unit 115 causes the monitor 13 to output the playback stop state notification screen (Figure 5D) (Step S109).

In Step S102, the signal processing unit 115 determines whether the vehicle is running based on the current running state information obtained from the running state sensor 20.

When the vehicle is running (S102: Yes), the signal processing unit 115 causes the monitor 13 to output the mask screen (Figure 5B) (Step S103). Thus, in this case, the user can listen to the sound of the BD-J title but cannot watch the image of the BD-J title.

When the vehicle is not running (S102: No), the signal processing unit 115 causes the monitor 13 to output the title reproduction screen (Figure 5A) (Step S110). Thus, in this case, the user can watch and listen to the image and sound of the BD-J title. Then, the processing of the screen display control returns to Step S101.

Subsequent to Step S103, in Step S104, the signal processing unit 115 initialize the silent state monitoring timer 124.

In Step S105, the signal processing unit 115 determines whether the user performs a stop operation or an eject operation during the reproduction of the BD-J title. The stop operation is an operation for stopping the reproduction of the title, and the eject operation is an operation for ejecting the optical disk from the reproducing apparatus 100.

When the stop operation or the eject operation is performed (S105: Yes), the reproduction of the BD-J title is stopped. Thus, the signal processing unit 115 causes the monitor 13 to output the playback stop state notification screen (Figure 5D) (Step S109). Specifically, in this case, the output screen of the monitor 13 is switched from the mask screen (while the vehicle is running) or the title reproduction screen (while the vehicle is stopped) to the playback stop state notification screen.

When the stop operation or the eject operation is not performed (S105: No), the signal processing unit 115 determines whether the title is being reproduced.

When the title is not being reproduced (S106: No), the signal processing unit 115 causes the monitor 13 to output the playback stop state notification screen (Figure 5D) (Step S109). Specifically, in this case, the output screen of the monitor 13 is switched from the mask screen (while the vehicle is running) or the title reproduction screen (while the vehicle is stopped) to the playback stop state notification screen.

When the title is being reproduced (S106: Yes), the signal processing unit 115 determines whether the vehicle is running based on the current running state information obtained from the running state sensor 20 (Step S107).

When the vehicle is not running (S107: No), the signal processing unit 115 causes the monitor 13 to output the tittle reproduction screen (Figure 5A) (Step S110). Specifically, when the vehicle shifts from the running state to the stop state, the output screen of the monitor 13 is switched from the mask screen to the title reproduction screen. When the vehicle is originally in the stop state, the output screen of the monitor 13 is continuously the title reproduction screen.

When the vehicle is running (S107: Yes), the signal processing unit 115 determines whether decoded sound data of the BD-J title under reproduction is in a silent state (Step S108).

When the sound data is not in the silent state (S108: No), the processing of the screen display control returns to Step S101.

When the sound data is in the silent state (S108: Yes), the signal processing unit 115 determines whether a duration of the silent state exceeds a predetermined threshold (for example, 30 seconds) (Step S111).

When the duration of the silent state does not exceed the threshold (S111: No), the processing of the screen display control returns to Step S105.

When the duration of the silent state exceeds the threshold (S111: Yes), the signal processing unit 115 refers to the BD-J application in the BD-ROM 10, and determines whether the disk unbound information is stored (Step S112).

The disk unbound information means information representing that the BD-ROM 10 is provided with the function of the disk unbound. Specifically, the information may be of a logical structure of a program designed to perform the function of the disk unbound, or a descriptor specifying existence of the function of the disk unbound.

When the disk unbound information is not stored (S112: No), the processing of the screen display control returns to Step S104.

When the disk unbound information is stored (S112: Yes), the signal processing unit 115 determines that a playback end position of the BD-J title is detected, and causes the monitor 13 to output the disk replacement demand screen (Figure 5C) (Step S113). Specifically, the output screen of the monitor 13 is switched from the mask screen to the disk replacement demand screen.

As such, the screen display control can be performed according to the sequence shown in Figure 6 to display a screen appropriate for a situation on the monitor 13.

In particular, in this embodiment, when the sound of the title is in the silent state continuously for a longer time than the threshold while the vehicle is running and the title is being reproduced, the disk replacement demand screen is displayed on the monitor 13 based on the disk replacement demand screen information previously prepared in the signal processing unit 115. This can prompt the user to replace the BD-ROM 10 at appropriate timing. In this embodiment, the output screen of the monitor 13 is switched from the mask screen to the disk replacement demand screen, and thus the disk replacement demand screen is displayed on the monitor 13. This allows the user to easily recognize that the BD-ROM 10 needs to be replaced. The output screen may be directly or indirectly switched from the mask screen to the disk replacement demand screen.

In this embodiment, control to output the disk replacement demand screen is performed on the condition that the disk unbound information is stored in the BD-J application in the BD-ROM 10 inserted into the reproducing apparatus 100. Thus, in a case where the disk unbound information is not stored, in other words, in a case where there is no different BD-ROM that contains the next part of the BD-J title contained in the inserted BD-ROM 10, the output of the disk replacement demand screen can be reliably avoided.

In this embodiment, the BD-J application of the BD-ROM 10 inserted into the reproducing apparatus 100 is referred to ore the condition that the silent state continues for a longer time than the threshold while the vehicle is running and the title is being reproduced. In other words, unless the silent state continues for a longer time than the threshold, the BD-J application is not referred to. In this way, it is possible to detect that the playback position of the BD-ROM 10 reaches the end more accurately.

In this embodiment, it is determined whether the silent state continues for a predetermined time or more on the condition that the vehicle is running and the title is being reproduced. While the vehicle is stopped or the reproduction of the title is stopped, the disk replacement demand screen is not displayed even if the silent state continues for a longer time than the predetermined time, and thus there is no need to make a determination on the silent state. Thus, unnecessary determination on the silent state can be avoided when the condition that the vehicle is running and the title is being reproduced is not satisfied.

When the disk replacement demand screen is once displayed, the display state of the disk replacement demand screen continues until a predetermined event (user operation or state change) occurs. When the predetermined event occurs, the signal processing unit 115 releases the output state of the disk replacement demand screen. The release condition will be described below.

In the description below, the disk replacement demand screen based on the disk replacement demand screen information held by the screen information holding unit 121 of the signal processing unit 115 is referred to as a "new disk replacement demand screen" for convenience. Meanwhile, the disk replacement demand screen based on the data recorded on the BD-ROM that stores the disk unbound information is referred to as a "conventional disk replacement demand screen".

The output state of the new disk replacement demand screen is released on the condition that any one of the following three events occurs. The three events include the stop operation by the user, the eject operation by the user, and the stop of the vehicle.

When the user performs the stop operation, the output screen is switched from the new disk replacement demand screen to a different screen. The output screen after switching is the playback stop state notification screen. This is because the stop operation stops the reproduction of the title.

Also when the user performs the eject operation, the output screen is switched from the new disk replacement demand screen to a different screen. In this situation, the conventional disk replacement demand screen is normally reproduced in the background. Thus, the output screen after switching is the conventional disk replacement demand screen. Thus, even if the output state of the new disk replacement demand screen is released, disk replacement can be continuously demanded of the user.

After the output screen is switched to the conventional disk replacement demand screen by the eject operation, the output of the conventional disk replacement demand screen is continued by Cashed Package, and this is the same as in the conventional technique. Specifically, when the user replaces the BD-ROM during output of the conventional disk replacement demand screen, the next part of the BD-J title is reproduced via disk discrimination, file system analysis, and BD-J application analysis.

Also when the vehicle stops, the output screen is switched from the new disk replacement demand screen to a different screen. In this situation, the conventional disk replacement demand screen is normally reproduced in the background. Thus, the output screen after switching is the conventional disk replacement demand screen. Thus, even if the output state of the new disk replacement demand screen is released, disk replacement can be continuously demanded of the user.

When the output screen is switched to the conventional disk replacement demand screen triggered by the vehicle being stopped, and then the user performs the stop operation, the output screen is further switched to the playback stop state notification screen.

When the output screen is switched to the conventional disk replacement demand screen triggered by the vehicle being stopped, and then the user performs the eject operation, the output of the conventional disk replacement demand screen is continued by the Cashed Package, and this is the same as in the conventional technique. Specifically, when the user replaces the BD-ROM during output of the conventional disk replacement demand screen, the next part of the BD-J title is reproduced via disk discrimination, file system analysis, and BD-J application analysis.

When the output screen is switched to the conventional disk replacement demand screen triggered by the vehicle being stopped, and then the vehicle starts running and there is no user operation, the sequence in Figure 6 is newly executed. Specifically, the output state returns to a state while the vehicle is running the title is being reproduced. Thus, the output screen is switched to the mask screen, and after a predetermined time further passes, the output screen is again switched to the new disk replacement demand screen.

As such, in this embodiment, the output state of the new disk replacement demand screen can be released at appropriate timing on the condition that a predetermined event occurs.

The embodiment of the present invention has been described above. The embodiment may be changed in various manners and carried out.

### Industrial Applicability

The optical disk reproducing apparatus of the present invention is useful as an optical disk reproducing apparatus for reproducing data recorded on a recording medium such as a BD-ROM disk.

### Reference Signs List

- 100: reproducing apparatus
- 101: disk tray
- 111: pickup
- 112: servo
- 115: signal processing unit
- 116: output unit
- 117: input signal receiving unit
- 118: running state information obtaining unit
- 121: screen information holding unit
- 122: playback end position detecting unit
- 123: user operation unit
- 124: silent state monitoring timer

## Claims

1. An on-vehicle optical disk reproducing apparatus, comprising:
a housing unit that houses an optical disk; and
and a signal processing unit that controls output of image and sound of a title reproduced based on data recorded on the housed optical disk,
wherein the signal processing unit holds first screen information concerning a mask screen that masks a reproduction screen of the title, and second screen information concerning a replacement demand screen that prompts replacement of the optical disk housed in the housing unit,
the signal processing unit causes the mask screen to be output based on the first screen information instead of the image of the title while the vehicle is running and the title is being reproduced, and
the signal processing unit switches a screen to be output from the mask screen based on the first screen information to the replacement demand screen based on the second screen information when the sound of the title is in a silent state continuously for a predetermined time or more while the vehicle is running the title is being reproduced.

2. The optical disk reproducing apparatus according to claim 1, wherein the signal processing unit switches the screen to be output to the replacement demand screen based on the second screen information concerning a condition that disk unbound information is stored in an application in the housed optical disk.

3. The optical disk reproducing apparatus according to claim 2, wherein the signal processing unit refers to the application in the housed optical disk on a condition that the silent state continues for the predetermined time or more while the vehicle is running the title is being reproduced.

4. The optical disk reproducing apparatus according to claim 1, wherein the signal processing unit determines that the silent state continues for the predetermined time or more on a condition that the vehicle is running and the title is being reproduced.

5. The optical disk reproducing apparatus according to claim 1, wherein the signal processing unit switches a screen to be output from the replacement demand screen based on the second screen information to a different screen on condition that a user performs a stop operation or an eject operation or a vehicle stops while the replacement demand screen is being output based on the second screen information.

6. The optical disk reproducing apparatus according to claim 5, wherein the signal processing unit further holds third screen information concerning a playback stop state notification screen representing that reproduction of the title is stopped, and
switches a screen to be output from the replacement demand screen based on the second screen information to the playback stop state notification screen based on the third screen information when the user performs the stop operation while the replacement demand screen is being output based on the second screen information.

7. The optical disk reproducing apparatus according to claim 5, wherein the signal processing unit switches a screen to be output from the replacement demand screen based on the second screen information to a different replacement demand screen based on the data recorded on the housed optical disk when the user performs the eject operation while the replacement demand screen is being output based on the second screen information.

8. The optical disk reproducing apparatus according to claim 5, wherein the signal processing unit switches a screen to be output from the replacement demand screen based on the second screen information to a different replacement demand screen based on the data recorded on the housed optical disk when the vehicle comes to stop while the replacement demand screen is being output based on the second screen information.
